# DEMANDE DE BREVET EUROPEEN

(11) **EP 2 624 586 A2**
(43) Date de publication de la demande: **07.08.2013**
(21) Numéro de dépôt: 13153707.8
(22) Date de dépôt: 01.02.2013
(51) Int. Cl.: H04N 21/8355, H04N 21/414, H04N 21/4627, H04N 21/266, H04N 21/41, H04N 21/4623, H04N 21/4784

(54) **Procédé et système de transfert d'un droit d'accès à un service de télévision numérique**

(30) Priorité: 03.02.2012 FR 1251039
(71) Demandeur: Neotion (SA), 13400 Aubagne (FR)
(72) Inventeur: Genevois, Christophe, 13830 La Bedoule (FR)
(74) Mandataire: Roman, Alexis

(57) **Abrégé**

L'invention concerne un procédé de transfert d'une séquence de données enregistrée dans une mémoire de données, cette séquence comportant au moins un droit d'accès à un service de télévision numérique, **caractérisé en ce que** ce procédé comprend successivement :
- une étape d'acquisition pour qu'un téléphone mobile (TP) comportant une mémoire de données acquière la séquence de données et l'enregistre dans ladite mémoire de données,
- une étape de transmission pour transmettre cette séquence du téléphone mobile (TP) à un récepteur numérique (R2) associé à un téléviseur (TV2),
- suite à ladite étape de transmission, une étape d'invalidation pour supprimer cette séquence de données dans la mémoire de données du téléphone mobile (TP).

## Description

### Domaine technique de l'invention.

L'invention a pour objet un procédé et un système de transfert d'un droit d'accès à un service de télévision numérique.

L'invention concerne le domaine technique des services payants pour lesquels le règlement est effectué par télépaiement, le paiement conduisant à la délivrance d'un droit d'accès au service concerné.

### État de la technique.

Les services de télévision numérique auxquels s'adressent la présente invention sont les plus divers et on pense notamment aux programmes de télévision. Il est ainsi possible d'acheter un ou plusieurs programmes en direct, d'acheter un programme spécifique à la demande (« Video On Demand » en anglais), d'acheter un jeu vidéo. Il est également possible d'acheter globalement une chaîne ou un groupe de chaînes pour une période déterminée, une année, un mois, un week-end, une journée ou une soirée.

Actuellement, l'acquisition des droits se fait par un récepteur numérique qui est muni d'un moyen de connexion à un réseau de télécommunication tel qu'un réseau de radiodiffusion, un réseau de téléphone, ou bien par Internet. Ce moyen de connexion permet d'acquérir les droits d'accès.

Cette acquisition se fait au moyen d'un programme qui est enregistré dans le récepteur. L'exécution de ce programme conduit à l'enchaînement des opérations suivantes :
- connexion à un serveur de programmes de télévision,
- identification des programmes requis parmi la totalité des programmes disponibles,
- achat du ou des droits requis par un quelconque moyen de paiement sécurisé,
- téléchargement de ces droits d'accès sous la forme d'un fichier numérique sécurisé par différents moyens tels que le cryptage, la signature électronique ou autres.

Les droits d'accès sont donc attachés à un récepteur particulier, celui qui a mis en oeuvre la transaction ci-dessus décrite.

Il peut arriver que l'utilisateur qui a acquis ces droits d'accès souhaite en disposer, au moins temporairement, sur un autre récepteur.

On connait par le document brevet EP 1.509.024 (SAMSUNG) un procédé pour partager des droits d'accès à un contenu crypté, entre plusieurs utilisateurs. Un premier utilisateur détenant un objet de droit peut partager des droits d'accès à un contenu crypté avec d'autres utilisateurs. Par exemple, si le premier utilisateur possède un objet de droit avec des droits pour 10 lectures, il peut partager des droits pour 5 lectures avec un second utilisateur et des droits pour 3 lectures avec un troisième utilisateur. Le premier utilisateur crée un objet de droit définissant des droits pour 5 lectures et un autre objet de droit définissant des droits pour 3 lectures. Ce sont ces nouveaux objets de droit créés qui sont transférés aux autres utilisateurs et non pas l'objet de droit initial du premier utilisateur. Cette méthode de transfert de droit est donc relativement complexe et inappropriée pour transférer des droits d'accès à un récepteur numérique associé à un téléviseur.

On connait également par le document EP 2.131.549 (ERICSSON) concerne une technique de distribution de contenus au sein d'un groupe de partage. Ce document ne traite pas du problème de transfert des droits d'accès à un récepteur numérique.

La présente invention a ainsi pour objet de permettre à un utilisateur de disposer des services de télévision numérique auxquels il a droit sur un quelconque récepteur de son choix.

L'invention a également pour objectif de fournir un système de transfert d'un droit d'accès à des services de télévision numérique de conception simple, facile d'utilisation et peu onéreux.

### Divulgation de l'invention.

La solution proposée par l'invention est un procédé de transfert d'une séquence de données enregistrée dans une mémoire de données cette séquence comportant au moins un droit d'accès à un service de télévision numérique. Ce procédé est remarquable en ce qu'il comprend successivement :
- une étape d'acquisition pour qu'un téléphone mobile comportant une mémoire de données acquière la séquence de données et l'enregistre dans ladite mémoire de données,
- une étape de transmission pour transmettre cette séquence de donnée du téléphone mobile à un récepteur numérique associé à un téléviseur,
- suite à ladite étape de transmission, une étape d'invalidation pour supprimer cette séquence de données dans la mémoire de données du téléphone mobile.

Ainsi, les droits d'accès acquis sur le téléphone mobile depuis un lieu A sont rapidement et simplement transférés au récepteur numérique qui peut se trouver dans un second lieu B distant dudit lieu A. Les droits d'accès deviennent ainsi nomades, le téléphone mobile dans lequel sont enregistrés ces droits pouvant facilement être transporté d'un lieu à un autre. Par exemple, si l'utilisateur du téléphone portable a acquis des droits pour visualiser une rencontre sportive, il peut se déplacer chez une autre personne et transférer ses droits au récepteur numérique de cette autre personne, étant entendu que ledit récepteur est initialement dépourvu de ces droits d'accès.

Il faut pourtant s'assurer que les droits d'accès ne soient pas indûment dupliqués. C'est la raison pour laquelle il convient d'invalider ces droits dans le téléphone mobile une fois qu'ils ont été transférés au récepteur numérique.

D'autres caractéristiques avantageuses de ce procédé sont listées ci-dessous, chacune de ces caractéristiques pouvant être considérées seules ou en combinaison avec les caractéristiques remarquables définies ci-dessus :
- le procédé peut comprendre les étapes préalables suivantes : - une étape d'acquisition pour qu'un premier récepteur numérique associé à un premier téléviseur acquière la séquence de données comportant au moins un droit d'accès à un service de télévision numérique, ledit droit d'accès étant initialement dédié audit premier récepteur ; - une étape de transfert pour transférer cette séquence du premier récepteur numérique au téléphone mobile ; - suite à ladite étape de transfert, une étape d'invalidation pour supprimer cette séquence dans le premier récepteur numérique.
- l'étape d'acquisition se fait au moyen d'un programme d'acquisition enregistré dans le premier récepteur numérique, lequel programme d'acquisition mène à la succession des opérations suivantes : - connexion à un serveur de programmes de télévision ; - identification des programmes requis parmi la totalité des programmes disponibles ; - achat du ou des droits d'accès requis par un moyen de paiement sécurisé ; - téléchargement de ces droits sous la forme de fichiers numériques sécurisés dans une mémoire de données du récepteur numérique.
- l'étape de transfert se fait au moyen d'un programme de transfert enregistré dans une mémoire de travail du premier récepteur numérique, lequel programme permet l'exécution des opérations suivantes : - connexion d'un moyen de transfert du premier récepteur numérique à un moyen de réception du téléphone mobile ; - identification des droits d'accès sélectionnés par l'utilisateur pour le transfert ; - transfert de la séquence de données comportant les droits d'accès sélectionnés de la mémoire de données du premier récepteur numérique à la mémoire de données du téléphone mobile ; - suppression de la séquence de données comportant les droits d'accès sélectionnés dans la mémoire de données du premier récepteur numérique.

L'invention vise aussi un téléphone mobile destiné à la mise en oeuvre du procédé selon l'invention, et qui comprend une mémoire de données dans laquelle figure au moins un droit d'accès et qui comprend aussi des moyens de transmission pour transmettre ce droit d'accès à un récepteur numérique associé à un téléviseur ; de plus, ce téléphone mobile comprend des moyens d'invalidation pour supprimer ce droit d'accès de la mémoire de donnée après l'avoir transmis.

Le téléphone mobile peut être un téléphone intelligent, les programmes correspondants aux droits d'accès étant directement visualisés sur ledit téléphone.

L'invention concerne en outre un système de transfert d'une séquence de données enregistrée dans une mémoire de données, cette séquence comportant au moins un droit d'accès à un service de télévision numérique. Ce système est remarquable en ce qu'il comprend :
- au moins un moyen d'acquisition pour acquérir la séquence de données et l'enregistrer dans la mémoire de données d'un téléphone mobile,
- au moins un moyen de transmission configuré pour transmettre cette séquence du téléphone mobile à un récepteur numérique associé à un téléviseur,
- une fois ladite séquence transmise, au moins un moyen d'invalidation configuré pour supprimer la séquence de données comportant ce droit d'accès dans la mémoire de données du téléphone mobile.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente schématiquement un premier mode de réalisation de l'invention, et
- la figure 2 représente schématiquement un deuxième mode de réalisation de l'invention.

Les éléments présents sur plusieurs figures sont affectés d'une seule et même référence.

### Modes préférés de réalisation de l'invention.

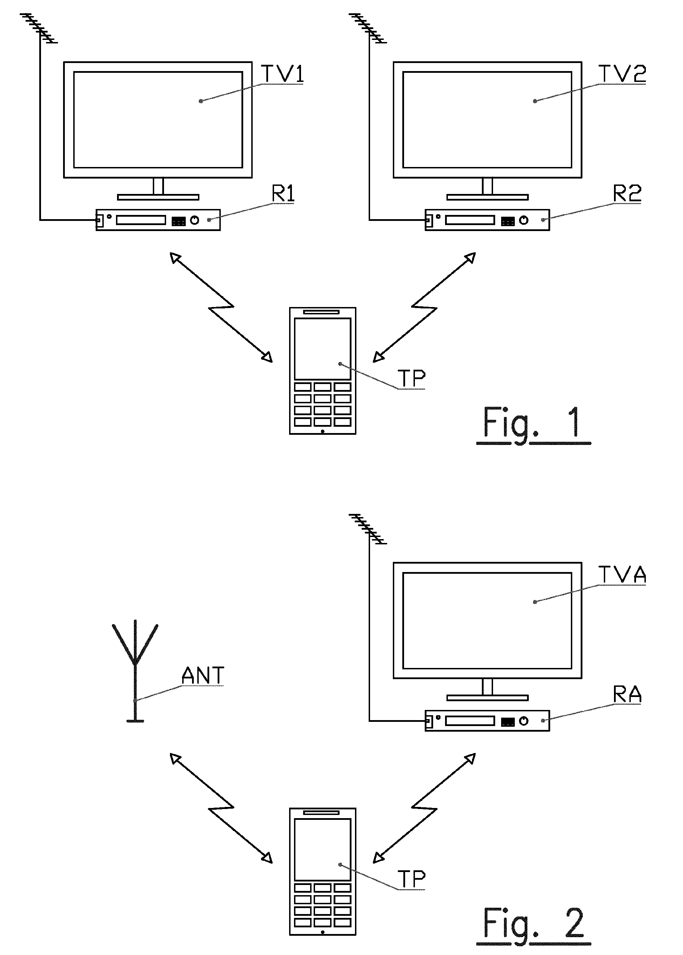

En référence à la figure 1, un premier mode de réalisation de l'invention est présenté. Un premier récepteur R1 est associé à un premier téléviseur TV1. Le premier récepteur R1 comprend un moyen de connexion à un quelconque réseau de télécommunications. De manière connue, ce moyen de connexion lui permet de faire l'acquisition de droits d'accès à un service de télévision numérique. Il acquière plus particulièrement une séquence de données comportant au moins un droit d'accès. Ce ou ces droits d'accès sont initialement dédiés au premier récepteur R1. L'acquisition se fait au moyen d'un programme d'acquisition enregistré dans le premier récepteur R1. Comme cela a déjà été précisé, ce programme d'acquisition mène à la succession des opérations suivantes :
- connexion à un serveur de programmes de télévision,
- identification des programmes requis parmi la totalité des programmes disponibles,
- achat du ou des droits d'accès requis par un moyen de paiement sécurisé,
- téléchargement de ces droits sous la forme de fichiers numériques (ou séquence de données) sécurisés dans une mémoire de données du récepteur numérique R1.

Jusqu'à présent, ces droits d'accès étaient définitivement attachés au premier récepteur R1.

Selon l'invention, ce premier récepteur R1 peut être considéré comme un terminal maître et il est pourvu d'un moyen de transfert.

Toujours selon l'invention, un terminal mobile TP qui peut être considéré comme un terminal esclave comprend un moyen de réception prévu pour coopérer avec le moyen de transfert du terminal maître R1. Le terminal mobile TP est typiquement un téléphone portable (Smartphone, ou autres), comportant une mémoire de données.

La liaison entre le moyen de transfert du premier récepteur R1 et le moyen de réception du téléphone portable TP peut être de toute nature :
- liaison filaire telle que câble USB, câble Ethernet, etc.,
- liaison sans fil telle que radio, infrarouge ou de manière générale toute liaison électromagnétique comme la liaison dite « NFC » pour « Near Field Communication » en anglais.

Le processus de communication entre le moyen de transfert du premier récepteur R1 et le moyen de réception du téléphone portable TP fait l'objet d'une sécurisation par des techniques connues telles que le cryptage ou la signature électronique. De fait, la séquence de données comportant le ou les droits d'accès est qui est transférée, est cryptée et signée électroniquement.

Le transfert de la séquence comportant les droits d'accès du premier récepteur R1 au téléphone portable TP peut être initié par l'un ou l'autre de ces terminaux.

A titre d'exemple, ce transfert se fait au moyen d'un programme de transfert enregistré dans une mémoire de travail du premier récepteur R1.

Le programme de transfert permet l'exécution des opérations suivantes :
- connexion du moyen de transfert du premier récepteur R1 au moyen de réception du téléphone portable TP,
- éventuellement, authentification du premier récepteur R1 vis-à-vis du téléphone portable TP,
- identification des droits d'accès sélectionnés par l'utilisateur pour le transfert,
- transfert de la séquence de données comportant les droits sélectionnés de la mémoire de données du premier récepteur R1 à la mémoire de données du téléphone portable TP,
- suppression de la séquence de données comportant les droits d'accès sélectionnés dans la mémoire de données du premier récepteur R1.

Dorénavant, le téléphone portable TP est en possession des droits d'accès sélectionnés. S'il s'agit d'un terminal dit « intelligent » tel qu'un téléphone intelligent (« Smartphone » en anglais), les programmes correspondants aux droits d'accès sélectionnés peuvent être directement visualisés sur ce terminal. En pratique, un programme de décodage connu enregistré dans la mémoire de travail du téléphone portable TP permet de :
- analyser le fichier contenant les droits d'accès sélectionnés,
- débloquer le ou les programmes de télévision liés à ces droits d'accès.

Quelle que soit la nature du téléphone portable TP, celui-ci peut à son tour devenir un terminal maître pour transférer la séquence de données comportant les droits d'accès dont il dispose à un nouveau terminal esclave, à savoir un deuxième récepteur R2 associé à un deuxième téléviseur TV2.

Ainsi, un nouveau transfert est effectué de tout ou partie des droits d'accès du terminal mobile TP au deuxième récepteur. Ce transfert est identique à celui décrit ci-dessus, si bien qu'il ne sera pas plus détaillé.

Il ressort de ce qui précède qu'un utilisateur autorisé peut, par l'intermédiaire du téléphone portable TP, transférer au deuxième récepteur R2 certains droits d'accès initialement dédiés au premier récepteur R1.

En référence à la figure 2, un deuxième mode de réalisation de l'invention est présenté.

Maintenant, c'est le téléphone portable TP qui comprend un moyen de connexion à un réseau de télécommunications qui diffuse des informations au moyen d'une antenne ANT. Ce moyen de connexion permet au téléphone portable TP de faire directement l'acquisition de droits d'accès à des programmes de télévision via ce réseau de télécommunications. L'acquisition se fait au moyen du même programme d'acquisition que celui prévu ci-dessus, mais ce programme réside maintenant dans le téléphone portable TP.

Dès lors, si ce téléphone portable TP en a la capacité, on peut visionner les programmes de télévision associés aux droits d'accès acquis directement sur ce terminal. On peut en tout état de cause transférer la séquence de données comportant les droits acquis à un récepteur hôte RA couplé à un téléviseur TVA.

Ici le terminal maître est le téléphone portable TP et c'est lui qui incorpore le moyen de transfert. Le terminal esclave est le récepteur hôte RA et c'est lui qui incorpore le moyen de réception prévu pour coopérer avec le moyen de transfert.

Le programme de transfert est mis en oeuvre comme indiqué précédemment.

Par ailleurs, on peut prévoir qu'un utilisateur puisse acheter plusieurs droits d'accès identiques associés à un seul programme de télévision identifié. Le nombre de droits d'accès identiques est alors enregistré dans la mémoire de données en regard du droit d'accès lui-même.

Lorsque ce droit d'accès est transféré, ce nombre de droits est décrémenté d'une unité. Par conséquent, il suffit avant d'effectuer un transfert du droit d'accès de vérifier que le nombre de droits est différent de zéro.

Alternativement, on peut associer une signature numérique différente à chacun des droits associés au même programme de télévision.

Les exemples de réalisation de l'invention présentés ci-dessus ont été choisi eu égard à leur caractère concret. Il ne serait cependant pas possible de répertorier de manière exhaustive tous les modes de réalisation que recouvre cette invention. En particulier, toute étape ou tout moyen décrit peut être remplacé par une étape ou un moyen équivalent sans sortir du cadre de la présente invention.

En définitive, le système de transfert d'une séquence de données enregistrée dans une mémoire de données, cette séquence comportant au moins un droit d'accès à un service de télévision numérique, comprend :
- au moins un moyen d'acquisition pour acquérir la séquence de données et l'enregistrer dans la mémoire de données d'un téléphone mobile TP,
- au moins un moyen de transmission conforme à ceux précédemment décrits et configuré pour transmettre cette séquence du téléphone mobile (TP) à un récepteur numérique (R2, RA) associé à un téléviseur (TV2, TVA),
- une fois ladite séquence transmise, au moins un moyen d'invalidation conforme à ceux précédemment décrits et configuré pour supprimer la séquence de données comportant ce droit d'accès dans la mémoire de données du téléphone mobile (TP).

Le terminale maître (R1 ; TP) et le terminal esclave (TP ; R2, RA) pouvant être alternativement un récepteur numérique, respectivement un téléphone mobile, ou un téléphone mobile, respectivement un récepteur numérique.

## Revendications

1. Procédé de transfert d'une séquence de données enregistrée dans une mémoire de données, cette séquence comportant au moins un droit d'accès à un service de télévision numérique, **caractérisé en ce que** ce procédé comprend successivement :
- une étape d'acquisition pour qu'un téléphone mobile (TP) comportant une mémoire de données acquière la séquence de données et l'enregistre dans ladite mémoire de données,
- une étape de transmission pour transmettre cette séquence du téléphone mobile (TP) à un récepteur numérique (R2, RA) associé à un téléviseur (TV2, TVA),
- suite à ladite étape de transmission, une étape d'invalidation pour supprimer cette séquence de données dans la mémoire de données du téléphone mobile (TP).

2. Procédé selon la revendication 1, comprenant les étapes préalables suivantes :
- une étape d'acquisition pour qu'un premier récepteur numérique (R1) associé à un premier téléviseur (TV1) acquière la séquence de données comportant au moins un droit d'accès à un service de télévision numérique, ledit droit d'accès étant initialement dédié audit premier récepteur (R1),
- une étape de transfert pour transférer cette séquence du premier récepteur numérique (R1) au téléphone mobile (TP),
- suite à ladite étape de transfert, une étape d'invalidation pour supprimer cette séquence dans le premier récepteur numérique (R1).

3. Procédé selon la revendication 2, dans lequel l'étape d'acquisition se fait au moyen d'un programme d'acquisition enregistré dans le premier récepteur numérique (R1), lequel programme d'acquisition mène à la succession des opérations suivantes :
- connexion à un serveur de programmes de télévision,
- identification des programmes requis parmi la totalité des programmes disponibles,
- achat du ou des droits d'accès requis par un moyen de paiement sécurisé,
- téléchargement de ces droits sous la forme de fichiers numériques sécurisés dans une mémoire de données du récepteur numérique (R1).

4. Procédé selon la revendication 2, dans lequel l'étape de transfert se fait au moyen d'un programme de transfert enregistré dans une mémoire de travail du premier récepteur numérique (R1), lequel programme permet l'exécution des opérations suivantes :
- connexion d'un moyen de transfert du premier récepteur numérique (R1) à un moyen de réception du téléphone mobile (TP),
- identification des droits d'accès sélectionnés par l'utilisateur pour le transfert,
- transfert de la séquence de données comportant les droits d'accès sélectionnés de la mémoire de données du premier récepteur numérique (R1) à la mémoire de données du téléphone mobile (TP),
- suppression de la séquence de données comportant les droits d'accès sélectionné dans la mémoire de données du premier récepteur numérique (R1).

5. Téléphone mobile (TP) destiné à la mise en oeuvre du procédé selon l'une des revendications 1 à 4, comprenant une mémoire de données dans laquelle figure au moins un droit d'accès, **caractérisé en ce qu'il** comprend :
- des moyens de transmission pour transmettre ledit droit d'accès à un récepteur numérique (R2, RA) associé à un téléviseur (TV2, TVA),
- des moyens d'invalidation pour supprimer ce droit d'accès de la mémoire de données, après l'avoir transmis.

6. Téléphone mobile (TP) selon la revendication 5, **caractérisé en ce que** ledit téléphone est un téléphone intelligent, les programmes correspondants aux droits d'accès étant directement visualisés sur ledit téléphone.

7. Système de transfert d'une séquence de données enregistrée dans une mémoire de données, cette séquence comportant au moins un droit d'accès à un service de télévision numérique, **caractérisé en ce que** le système comprend :
- au moins un moyen d'acquisition pour acquérir la séquence de données et l'enregistrer dans la mémoire de données d'un téléphone mobile (TP),
- au moins un moyen de transmission configuré pour transmettre cette séquence du téléphone mobile (TP) à un récepteur numérique (R2, RA) associé à un téléviseur (TV2, TVA),
- une fois ladite séquence transmise, au moins un moyen d'invalidation configuré pour supprimer la séquence de données comportant ce droit d'accès dans la mémoire de données du téléphone mobile (TP).
